# EUROPÄISCHE PATENTSCHRIFT

(11) **EP 0 570 409 B1**
(45) Veröffentlichungstag und Bekanntmachung des Hinweises auf die Patenterteilung: **28.06.1995**
(21) Anmeldenummer: 92903614.3
(22) Anmeldetag: 04.02.1992
(51) Int. Cl.: G11B 27/30, G11B 27/10, G11B 27/00

(54) **VERFAHREN ZUM LESEN VON DATEN EINES ROTIERENDEN AUFZEICHNUNGSTRÄGERS**
METHOD OF READING DATA OFF A ROTATING RECORDING MEDIUM
PROCEDE DE LECTURE DES DONNEES ENREGISTREES SUR UN SUPPORT D'ENREGISTREMENT EN ROTATION

(30) Priorität: 09.02.1991 DE 4104041
(43) Veröffentlichungstag der Anmeldung: 24.11.1993
(73) Patentinhaber: Deutsche Thomson-Brandt GmbH, 78003 Villingen-Schwenningen (DE)
(72) Erfinder: BAAS, Dieter, D-7640 Kehl-Auenheim (DE)
(86) Internationale Anmeldenummer: EP9200232
(87) Internationale Veröffentlichungsnummer: WO9214249

(56) Entgegenhaltungen:
- US-A- 4 907 213
- Patent Abstracts of Japan, Band 8, Nr 228, P308, Zusammenfassung von JP 59-107406, publ 1984-06-21 TOSHIBA K.K.

## Beschreibung

Die Erfindung betrifft ein Verfahren zum Lesen von Daten eines rotierenden Aufzeichnungsträgers, auf dem die Daten in Datenspuren aufgezeichnet sind, auf dem die Daten in Blöcke aufgeteilt sind und auf dem zur Erzielung von Redundanz jeweils mindestens zwei gleiche Blöcke hintereinander auf den Datenspuren angeordnet sind.

Ein derartiges Verfahren kann z.B. in einem CD-Spieler vorgesehen werden, um das Inhaltsverzeichnis des rotierenden Aufzeichnungsträgers, der sogenannten Kompaktplatte, die häufig mit CD abgekürzt wird, zu lesen.

Welche Daten auf einer Kompaktplatte gespeichert sind, und wie sie der CD-Spieler verarbeitet, ist in dem Aufsatz "Zusammenstellen eines CD-Programms" aus Funkschau Nr. 15, 18.07.1986 auf Seite 26 bis 28 beschrieben.

Jede CD enthält ein Inhaltsverzeichnis, in dem Daten gespeichert sind, die Auskunft geben über die Anzahl der auf der Platte gespeicherten Programmblöcke, deren Anfangszeiten sowie über die Gesamtspieldauer der Platte. Die einzelnen Programmblöcke sind in der Regel Musikstücke, doch kann es sich z.B. auch um gesprochenen Text oder verschiedene Geräuschkulissen für die Vertonung von Filmen oder Dias handeln. Auf einer CD können bis zu 99 Programmblöcke gespeichert sein, jedoch finden sich auf einer CD mit Musik meist nur 10 bis 20 verschiedene Musikstücke.

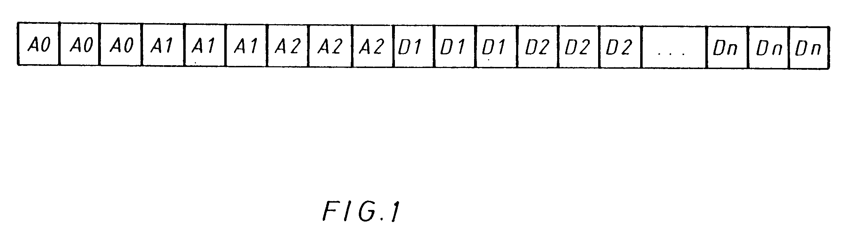

Das Inhaltsverzeichnis einer CD hat das in Figur 1 dargestellte Datenformat. Im ersten Block AO steht der Titel des ersten Musikstücks, im zweiten Block A1 der des letzten Musikstücks, und im dritten Block A2 ist die Gesamtspieldauer der CD angegeben. In den folgenden Blöcken D1 bis Dn stehen die Startzeiten der einzelnen n Musikstücke, die auf der CD aufgezeichnet sind. Um Redundanz zu erzielen, sind mehrere gleiche Blöcke vorgesehen. Bei dem in der Figur 1 gezeigten Beispiel sind jeweils drei gleiche Blöcke hintereinander auf der Datenspur angeordnet. Auf drei Blöcke AO folgen drei Blöcke A1, drei Blöcke A2, drei Blöcke D1, drei Blöcke D2 und so weiter, bis schließlich die letzten drei Blöcke Dn das Ende des Inhaltsverzeichnisses bilden.

Nach dem Einlegen einer CD in der CD-Spieler wird das Inhaltsverzeichnis der CD gelesen. Die im Inhaltsverzeichnis stehenden Daten werden in einem Speicher des CD-Spielers gespeichert. Erst wenn alle erforderlichen Daten des Inhaltsverzeichnisses gelesen und in dem erwähnten Speicher des CD-Spielers gespeichert sind, kann der CD-Spieler mit dem Abspielen der einzelnen Musikstücke beginnen. Der CD-Hörer muß daher, nachaem er eine CD zum Abspielen in seinen CD-Spieler gelegt hat, so lange warten, bis sein CD-Spieler das Inhaltsverzeichnis gelesen und dessen Daten gespeichert hat.

Die Zeit, die der CD-Spieler hierfür benötigt, die zweckmäßigerweise als Einlesezeit bezeichnet wird, ist ein wichtiges Qualitätsmerkmal eines CD-Spielers.

Es ist deshalb Aufgabe der Erfindung, die Einlesezeit eines CD-Spielers zu verkürzen, um dem CD-Hörer höheren Komfort zu bieten und um die Qualität des Gerätes zu verbessern.

Das erfindungsgemäße Verfahren gemäß Oberbegriff des Anspruchs 1 löst diese Aufgabe dadurch, daß eine Lesevorrichtung nach dem Lesen der Daten eines Blockes auf eine andere Spur springt, um dort mit dem Lesen der Daten eines anderen Blockes fortzufahren.

Es zeigen
- Figur 2: die Anordnung der Blöcke auf den Datenspuren einer CD zur Erläuterung eines ersten Ausführungsbeispieles;
- Figur 3: die Anordnung der Blöcke auf den Datenspuren einer CD zur Erläuterung eines zweiten Ausführungsbeispieles;
- Figur 4: die Anordnung der Blöcke auf den Datenspuren einer CD zur Erläuterung eines dritten Ausführungsbeispieles.

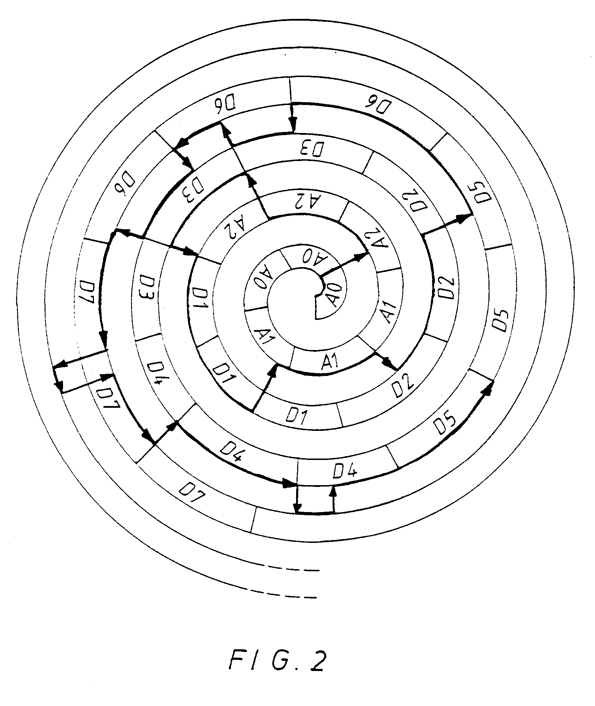

In der Figur 2 ist eine spiralförmige Datenspur einer CD gezeigt. Wie in der Figur 1 bereits dargestellt ist, sind jeweils drei gleiche Blöcke AO, drei gleiche Blöcke A1, drei gleiche Blöcke A2, drei gleiche Blöcke D1, D2, D3, D4, D5, D6 und D7 hintereinander auf den spiralförmigen Datenspuren angeordnet. In diesen Blöcken ist das Inhaltsverzeichnis der CD deshalb dreifach redundant aufgezeichnet. An den letzten Block D7 schließen sich die einzelnen Musikstücke an.

Die optische Abtastvorrichtung des CD-Spielers beginnt z.B. mit dem Lesen des ersten Blockes A0 und springt danach eine Spur radial nach außen, wo sie etwa die Mitte des zweiten Blockes A2 erfaßt. Sie bleibt nun auf dieser Spur, um den folgenden dritten Block A2 zu lesen. Die optische Abtastvorrichtung springt nun eine Spur nach außen und trifft dort auf das Ende des ersten Blockes D3; es wird nun der folgenden zweite Block D3 gelesen. Danach springt die optische Abtastvorrichtung eine Spur nach radial innen, wo sie auf den Anfang des ersten Blockes D1 trifft. Die optische Abtastvorrichtung tastet diese Spur weiter ab, um den zweiten Block D1 zu lesen. Weil am Ende des zweiten Blockes D1 noch ein gleicher Block D1 - der dritte Block D1 - folgt, springt die optische Abtastvorrichtung eine Spur radial nach innen, wo sie auf das Ende des ersten Blockes A1 trifft. Sie liest jetzt den folgenden zweiten Block A1. Weil in dieser Spur noch ein Block A1 folgt, springt die Abtastvorrichtung eine Spur radial nach außen, wo sie etwa auf die Mitte des ersten Blockes D2 kommt. Es wird der zweite Block D2 gelesen. Weil noch der dritte Block D2 folgt, springt die Abtastvorrichtung eine Spur nach außen, wo sie etwa im ersten Drittel des dritten Blockes D5 ankommt. Weil auf den dritten Block D5 ein anderer Block, der erste Block D6, folgt, bleibt die Abtastvorrichtung auf dieser Spur, um den Block D6 zu lesen. Weil aber auf den ersten Block D6 ein weiterer Block D6 folgt, springt die Abtastvorrichtung eine Spur nach innen, wo sie auf den Block D3 triftt, der bereits gelesen ist. Die Abtastvorrichtung springt deshalb eine Spur nach außen, wo sie auf den zweiten Block D6 trifft, dessen Inhalt ebenfalls bereits gelesen ist. Weil aber noch ein Block D6 folgt - der dritte Block D6 - , springt die Abtastvorrichtung wieder eine Spur nach innen. Weil sie dort auf den zweiten Block D3 trifft, dessen Inhalt bereits gelesen ist, springt sie wieder eine Spur nach außen. Dort trifft sie auf das Ende des dritten Blockes D6. Weil jetzt aber ein anderer Block, der erste Block D7 folgt, bleibt die Abtastvorrichtung in dieser Spur, um den Block D7 zu lesen. Am Ende des ersten Blockes D7 springt die Abtastvorrichtung eine Spur nach außen. Weil in dieser Spur aber keine zu speichernden Daten mehr aufgezeichnet sind, springt die Abtastvorrichtung wieder eine Spur nach innen, wo sie auf den zweiten Block D7 trifft. Am Ende des zweiten Blocks D7 springt sie eine Spur nach innen, weil der Block D7 bereits gelesen ist, und trifft auf das Ende des ersten Blockes D4. Sie liest nun den anschließenden zweiten Block D4, an dessen Ende sie eine Spur nach außen springt, wo jedoch keine zu lesenden Daten mehr liegen. Sie springt deshalb wieder eine Spur nach innen zurück, wo sie auf etwa das erste Drittel des dritten Blocks D4 trifft. Schließlich wird der erste Block D5 gelesen, wenn die Abtastvorrichtung an das Ende des dritten Blockes D4 gekommen ist.

Die optische Abtastvorrichtung hat jetzt alle Blöcke A0, A1, A2, und D1 bis D7 in folgender Reihenfolge gelesen: A0, A2, D3, D1, A1, D2, D6, D7, D4 und D5.

Durch die erfinderische Maßnahme, auf eine andere Spur radial nach innen oder außen zu springen, wenn ein bereits gelesener Block folgt, wird die zum Lesen des Inhaltsverzeichnisses einer CD benötigte Zeit beträchtlich verkürzt. Es werden nicht alle Blöcke dreimal gelesen, wie es beim Stand der Technik der Fall ist, wo die Abtastvorrichtung von innen nach außen entlang der spiralförmigen Datenspuren fährt, um alle Blöcke der Reihe nach zu lesen.

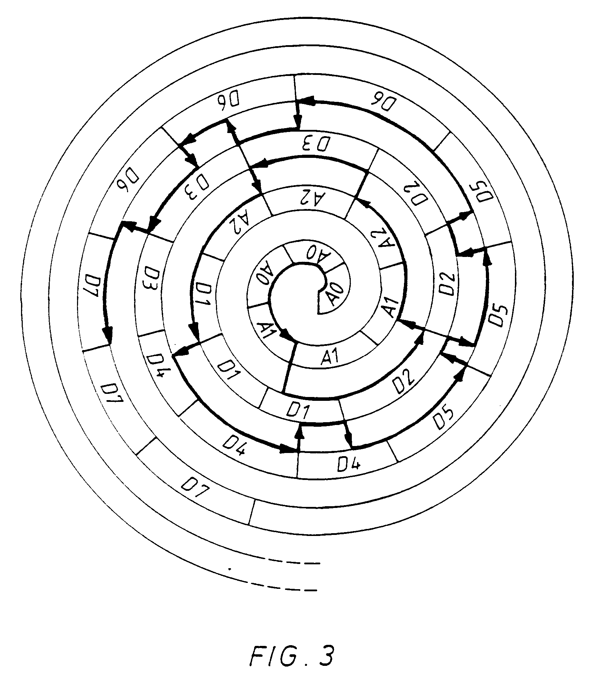

Es wird nun das in Figur 3 gezeigte Ausführungsbeispiel erläutert.

Die Abtastvorrichtung beginnt die ersten drei Blöcke A0 sowie den folgenden Block A1 zu lesen. Nach den ersten Block A1 springt die Abtastvorrichtung eine Spur nach außen, wo sie etwa auf das erste Viertel des dritten Blockes D1 kommt. Sie bleibt in dieser Spur, um den sich an den dritten Block D1 anschließenden Block D2 zu lesen. Nach dem Lesen des ersten Blockes D2 springt die Abtastvorrichtung eine Spur nach innen, wo sie etwa auf das erste Drittel des dritten Blockes A1 kommt. Sie liest den auf den dritten Block A1 folgenden ersten Block A2, um anschließend eine Spur nach außen zu springen. Dort trifft die Abtastvorrichtung auf das letzte Viertel des dritten Blockes D2, den sie bereits gelesen hat. Sie liest nun in derselben Spur den sich an den dritten Block D2 anschließenden Block D3. Nach dem Lesen der ersten Blockes D3 springt die Abtastvorrichtung wieder eine Spur nach innen, weil auf den ersten Block D3 der zweite Block D3 folgt. Sie trifft dabei auf den Anfang des dritten Blockes A2. Nach dem Ende des dritten Blockes A2 bleibt die Abtastvorrichtung in derselben Spur, um den folgenden Block D1 zu lesen, an dessen Ende sie eine Spur nach außen springt, weil der zweite Block D1 auf den ersten Block D1 folgt. Sie trifft auf etwa das erste Viertel des ersten Blockes D4. Sie liest nun den auf den ersten Block D4 folgenden zweiten Block D4 und springt an dessen Ende eine Spur nach innen, wo sie ungefähr auf die Mitte des dritten Blockes D1 triftt, der bereits gelesen wurde. Weil auf den dritten Block D1, der bereits gelesene erste Block D2 folgt, springt die Abtastvorrichtung eine Spur nach außen, um etwa auf das letzte Drittel des dritten Blockes D4 zu treffen, der ebenfalls bereits gelesen wurde. Sie liest aber jetzt den auf den dritten Block D4 folgenden ersten Block D5, an dessen Ende sie eine Spur nach innen springt zum ersten Block D2. Am Ende des ersten Blockes D2 springt die Abtastvorrichtung eine Spur nach außen, weil der Inhalt des folgenden zweiten Blockes D2 bereits gelesen ist. Sie tastet nun den zweiten Block D5 ab, der aber bereits gelesen wurde. Deshalb springt die Abtastvorrichtung am Ende des zweiten Blokkes D5 eine Spur nach innen, wo sie auf das letzte Drittel des zweiten Blockes D2 trifft. An dessen Ende springt sie wieder eine Spur nach außen, weil noch ein Block D2 folgt. Sie bewegt sich nun entlang der letzten Hälfte des dritten Blokkes D5, um an dessen Ende auf derselben Spur bleibend den ersten Block D6 zu lesen. Am Ende des ersten Blockes D6 springt die Abtastvorrichtung eine Spur radial nach innen, wo sie ungefähr auf die Mitte des ersten Blockes D3 kommt, dessen Inhalt aber bereits gelesen wurde. Am Ende des ersten Blockes D3 springt die Abtastvorrichtung eine Spur nach außen, weil nochmals ein Block D3 folgt. Am Ende des zweiten Blockes D6 springt die Abtastvorrichtung wieder eine Spur nach innen, wo sie ungefähr in die Mitte des dritten Blockes D3 trifft. Weil dieser Block D3 aber bereits gelesen ist, springt sie an dessen Ende wieder eine Spur nach außen, wo sie ungefähr auf das letzte Fünftel des dritten Blockes D6 trifft. Weil sich an den dritten Block D6 nun der erste Block D7 anschließt, der noch nicht gelesen wurde, bleibt die Abtastvorrichtung in dieser Spur, um den Block D7 zu lesen.

Die Abtastvorrichtung hat nun alle Blöcke in der folgenden Reihenfolge gelesen: A0, A1, D2, A2, D3, D1, D4, D5, D6 und D7.

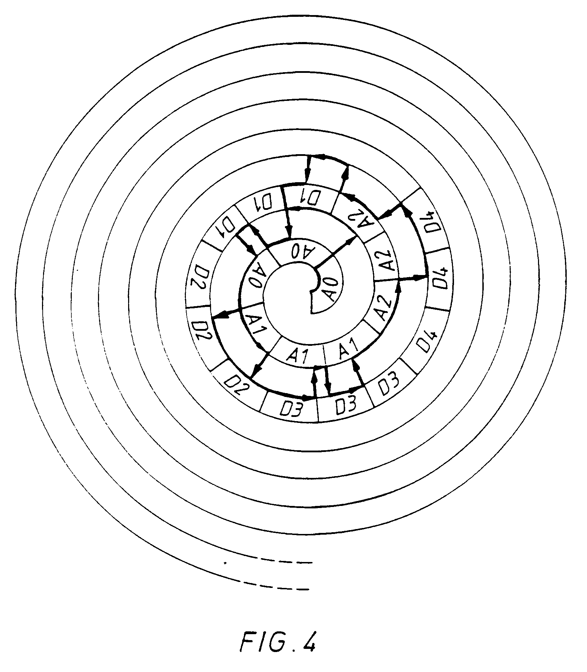

Es wird nun das in Figur 4 gezeigte Ausführungsbeispiel erläutert, bei dem insgesamt nur sieben verschiebene Blöcke redundant auf der CD abgespeichert sind, deren Längen unterschiedlich gewählt sind.

Die Abtastvorrichtung beginnt mit dem Lesen des ersten Blokkes A0. Sie springt eine Spur nach außen, wo sie etwa in der Mitte des dritten Blockes A2 kommt. Sie liest nun in dieser Spur den folgenden ersten Block D1, an dessen Ende sie eine Spur nach innen springt, wo sie etwa in die zweite Hälfte des zweiten Blockes A0 kommt. Am Ende des zweiten Blockes A0 springt sie eine Spur nach außen, weil der dritte Block A0 folgt, dessen Daten bereits gelesen wurden. Weil die Abtastvorrichtung bei diesem Sprung aber auf den dritten Block D1 trifft, springt sie wieder eine Spur nach innen zurück, wo sie an den Anfang des dritten Blockes A0 trifft. Am Ende des Blockes A0 liest die Abtastvorrichtung den folgenden ersten Block A1, an dessen Ende sie eine Spur nach außen springt, wo sie etwa auf die Mitte des dritten Blockes D2 kommt. Sie liest nun den sich an den dritten Block D2 anschließenden ersten Block D3. Nach dem Lesen des ersten Blockes D3 springt die Abtastvorrichtung eine Spur nach innen, wo sie etwa auf das Ende des zweiten Blockes A1 trifft. Weil dessen Inhalt aber bereits gelesen wurde, springt die Abtastvorrichtung am Ende des ersten Blockes A1 eine Spur nach außen, wo sie etwa in die Mitte des zweiten Blockes D3 trifft, dessen Inhalt aber ebenfalls bereits gelesen wurde. Die Abtastvorrichtung springt deshalb wieder eine Spur nach innen, wo sie ungefähr in die erste Hälfte des dritten Blockes A1 trifft. Weil aber auf den dritten Block A1 der noch nicht gelesene Block A2 folgt, Liest die Abtastvorrichtung nun den ersten Block A2. An dessen Ende springt die Abtastvorrichtung eine Spur nach außen, wo sie ungefähr auf die Mitte des zweiten Blockes D4 trifft. Sie liest nun den folgenden dritten Block D4, weil dieser Block noch nicht gelesen wurde. Am Ende des dritten Blockes D4 springt die Abtastvorrichtung eine Spur nach innen, wo sie auf den dritten Block A2 trifft. Sie springt an dessen Ende eine Spur nach außen, weil sich an den dritten Block A2 der erste Block D1 anschließt, der bereits gelesen wurde. Weil sich auf dieser Spur aber keine zu lesenden Blöcke mehr befinden, springt die Abtastvorrichtung eine Spur nach innen, wo sie auf die Mitte des ersten Blockes D1 trifft, den sie bereits gelesen hat. Am Ende des ersten Blockes D1 springt die Abtastvorrichtung daher eine Spur nach innen, wo sie auf die Mitte des zweiten Blockes A0 trifft. Am Ende des zweiten Blokkes A0 springt die Abtastvorrichtung eine Spur nach außen auf den Anfang des dritten Blockes D1, der ebenfalls bereits gelesen worden ist. Deshalb springt die Abtastvorrichtung eine Spur nach innen, wo sie auf den Anfang des dritten Blockes A0 trifft. An dessen Ende springt sie eine Spur nach außen, weil der bereits gelesene erste Block A1 folgt. Die Abtastvorrichtung kommt kurz nach dem Anfang des zweiten Blockes D2 an und liest zum Schluß noch den folgenden dritten Block D2. Jetzt hat die Abtastvorrichtung alle Blöcke A0, A1, A2, D1 bis D4 in der folgenden Reihenfolge gelesen: A0, D1, A1, D3, A2, D4 und D2.

Wie bei einer CD die Reihenfolge der einzelnen Spurwechsel der Abtastvorrichtung ausfällt, hängt von der gesamten Anzahl der Blöcke, von der Anzahl der redundanten Blöcke und von der Länge der einzelnen Blöcke ab. Je höher die Redundanz ist, oder mit anderen Worten ausgedrückt, je größer die Anzahl gleicher Blöcke auf der Platte ist, desto größer fällt die Zeitersparnis beim Erfindungsgemaßen Verfahren aus.

Das erfindungsgemäße Verfahren ist allgemein für das Lesen von Daten eines rotierenden Aufzeichnungsträgers geeignet, auf dem die Daten in konzentrischen Kreisen oder spiralförmigen Datenspuren in Blöcke aufgeteilt derart redundant aufgezeichnet sind, daß jeweils mehrere gleiche Blöcke auf den Datenspuren aufeinander folgen. Das erfindungsgemäße Verfahren läßt sich besonders vorteilhaft in einem CD-Spieler oder Videoplattenspieler einsetzen, um das Inhaltverzeichnis der Audio- oder Videoplatte zu lesen.

## Patentansprüche

1. Verfahren zum Lesen von Daten eines rotierenden Aufzeichnungsträgers, auf dem die Daten in Blöcke aufgeteilt sind und auf dem zur Erzielung von Redundanz jeweils mindestens zwei gleiche Blöcke hintereinander auf den Datenspuren angeordnet sind, **dadurch gekennzeichnet,** daß eine Lesevorrichtung nach dem Lesen der Daten eines Blockes auf eine andere Spur springt, um dort mit dem Lesen der Daten eines anderen Blockes fortzufahren.

2. Verfahren nach Anspruch 1, **dadurch gekennzeichnet**, daß die Lesevorrichtung erst dann auf eine andere Spur springt, wenn sie an einen Block kommt, dessen Daten sie bereits gelesen hat.

3. Verfahren nach Anspruch 1 oder 2, **dadurch gekennzeichnet,** daß die Lesevorrichtung auf einer als Aufzeichnungsträger vorgesehenen Platte abwechselnd eine Datenspur radial nach außen und innen springt.

4. Verfahren nach Anspruch 1, 2 oder 3, **dadurch gekennzeichnet**, daß als Aufzeichnungsträger eine sogenannte Kompaktplatte vorgesehen ist, deren Inhaltsverzeichnis in einem CD-Spieler gelesen und in einem Speicher des CD-Spielers gespeichert wird.

## Claims

1. Method for reading the data of a rotating recording medium on which the data are divided into blocks and on which, for achieving redundancy, in each case at least two identical blocks are arranged following each other on the data tracks, **characterized in that** a reading device, after reading the data of a block, jumps onto another track in order to continue reading the data of another block there.

2. Method according to claim 1, **characterized in that** the reading device only jumps onto another track if it arrives at a block whose data it has read already.

3. Method according to claim 1 or 2, **characterized in that** the reading device jumps one data track alternately radially inwards and outwards on a disk provided as a recording medium.

4. Method according to claim 1, 2 or 3, **characterized in that** as recording medium a so-called compact disk is used, the directory of which is read in a CD player. and stored in a memory of said CD player.

## Revendications

1. Procédé de lecture de données d'un support d'informations en rotation sur lequel les données sont réparties en blocs et sur lequel, pour obtenir une redondance, au moins deux blocs identiques sont toujours disposés consécutivement, **caractérisé en** **ce qu**' après la lecture des données d'un bloc, un dispositif de lecture saute sur une autre piste où il poursuit par la lecture des données d'un autre bloc.

2. Procédé selon la revendication 1, **caractérisé en ce que** le dispositif de balayage ne saute sur une autre piste que lorsqu'il arrive sur un bloc dont il a déjà lu les données.

3. Procédé selon la revendication 1 ou 2, **caractérisé en ce que** le dispositif de balayage saute alternativement et radialement d'une piste vers l'extérieur et vers l'intérieur sur un disque prévu comme support d'informations.

4. Procédé selon la revendication 1, 2 ou 3, **caractérisé en ce qu'** un disque compact est prévu comme support d'informations, dont le sommaire est lu dans un lecteur de CD et mémorisé dans une mémoire du lecteur de CD.
